# EUROPEAN PATENT APPLICATION

(11) **EP 1 288 812 A2**
(43) Date of publication of application: **05.03.2003**
(21) Application number: 02018481.8
(22) Date of filing: 16.08.2002
(51) Int. Cl.: G06F 17/60, H04B 7/185

(54) **Broadcast mail receiving device and its method**

(30) Priority: 27.08.2001 JP 2001255686; 10.12.2001 JP 2001375631
(71) Applicant: MATSUSHITA ELECTRIC INDUSTRIAL CO., LTD., Kadoma-shi, Osaka 571-8501 (JP)
(72) Inventor: Oashi, Masahiro, Kyotanabe-shi, kyoto, 610-0331 (JP); Aiso, Rinzu, Daitu-shi, Osaka, 574-0043 (JP); Sanada, Norio, Kobe-shi, Hyogo, 658-0082 (JP); Motosaka, Kinichi, Katano-shi, Osaka 576-0021 (JP); Iida, Hiromi, Moriguchi-shi, Osaka, 570-0034 (JP); Fujita, Atsuo, Aki-gun, Hiroshima, 735-0013 (JP); Yagi, Yukio, Ikoma-shi, Nara, 630-0122 (JP)
(74) Representative: Balsters, Robert

(57) **Abstract**

A broadcast receiving device comprises: a memory medium 403 that stores a received e-mail and broadcast mail, an add-on program 402b for adding an e-mail header to a broadcast mail body text, and a display program 402c that displays a broadcast mail and an e-mail stored in the memory medium 403 on a monitor 407. When a CPU 411 receives the broadcast mail according to the programs, it extracts the broadcast mail body text, adds the e-mail header to the broadcast mail, stores it in the memory medium 403. Then the CPU 411 reads out the information of the broadcast mail and the e-mail stored in the memory medium 403, and displays them in one screen.

## Description

### BACKGROUND OF THE INVENTION

### (1) Field of the Invention

The present invention relates to a device that can send/receive e-mails and broadcast mails such as a general purpose computer (i.e. a personal computer), a digital broadcast receiving device or a digital information terminal device which is connectable to Internet (hereinafter referred to as "the broadcast receiving device"), and a broadcast receiving method.

### (2) Description of the Related Art

In recent years, as the progress of the digital technique, by using the IT device terminals (personal computers) to use e-mail with the third party, users are in a very easy communication surroundings. In these days, since portable IT terminals (i.e. cellular phones) have been widely spread, e-mail is available and it enables to exchange the information efficiently.

The above-mentioned e-mail sending/receiving method, is standardized in RFC822 (STANDARD FOR THE FORMAT OF ARPA INTERNET TEXT MESSAGES) and the address is identified by mail address (matsushita@hi-ho.co.jp). In a NTT docomo cellular phone, it is identified by a mail address that includes telephone numbers such as 09012345678@docomo.ne.jp.

Delivering method of the broadcast mail is defined in the CONDITIONAL ACCESS SPECIFICATION FOR DIGITAL SATELLITE BROADCASTING SERVICES USING BROADCASTING SATELLITES (ARIB STD-B25), the body text of the message is able to be sent with a broadcast multiplexed into MPEG2 stream in an EMM (Entitlement Management Message) section form.

Therefore, in recent years, the function of receiving broadcast mail has been available and further, there have been more and more broadcast receiving devices available having two functions, receiving a broadcast mail and sending/receiving an e-mail.

With using said broadcast receiving device, a TV viewer is able not only to see the broadcast mail with this broadcast receiving device, but also to send/receive e-mails, and it is beneficial for us for this diversification of the e-mail communication.

However, since a data structure of the broadcast mail sent in broadcast is different from that of an e-mail sent/received via its bidirectional communication line, these two kinds of mails are stored in different areas and displayed in different screens. Also, it is unable to transfer the broadcast mail to the other broadcast receiving device due to the difference of data structure.

In order to realize a conditional access to receive from a specific broadcast receiving device, the broadcast mail should include some fields which don't exist in e-mail such as a table_id, a card ID and a charging entity identifier etc. in an area of EMM section header, EMM body text message holding part and EMM message decrypted header, etc. Also, the broadcast mail is stored in an IC card memory which is inserted into the broadcast receiving device (hereinafter also referred to as "receiver"), so it is stored in a different memory area from the e-mail.

For these differences, the broadcast mail and the e-mail are displayed in a different screen. Also, there is a difference for displayed form of the received mail and an operation interface. For these reasons, viewers should operate various complicated operations that occur depending only on its distinction between the broadcast mail and the e-mail. This is the first problem.

Further, should it occur an event such as receiving the broadcast mail from a broadcast station or receiving updated TV program information or a reservation program, with a conventional broadcast receiving device, it is necessary to go out to the place where the device is installed to know certain information such as start/end of the event. This is the second problem.

### SUMMARY OF THE INVENTION

Accordingly, the object of the present invention is to solve the above-mentioned first problem, that is, when viewing the message, to avoid various complicated operations that occur depending only on its distinction between the broadcast mail and the e-mail.

Also, this invention is to solve the above mentioned second problem, that is, to provide the broadcast receiving device to know contents of events such as event occurrence or event end information without going to the installed place.

In order to solve the above first problem, the broadcast receiving device according to the present invention comprises of a broadcast mail receiving unit operable to receive the broadcast mail and an e-mail header adding unit operable to add the e-mail header to the broadcast mail received by the broadcast mail receiving unit.

Thus, the broadcast mail can be treated same as the e-mail. As a result, it is possible to store the broadcast mail and the e-mail in same one memory medium and view it in same one screen. Accordingly, when viewing the massage, it is avoidable to operate various complicated operations that occur depending only on its distinction between the broadcast mail and the e-mail, thus the mail view operation can be developed to a large extent.

In order to solve the above second problem, the broadcast receiving device according to the present invention comprises a broadcast mail receiving unit operable to receive a broadcast mail, an e-mail header adding unit operable to add an e-mail to a broadcast mail received by the broadcast receiving unit, an e-mail sending/receiving unit operable to send/receive an e-mail via a bidirectional communication line and a broadcast transferring unit operable to transfer a broadcast mail of which body text is added with an e-mail header by having the e-mail sending and receiving unit send the broadcast mail when the broadcast mail receiving unit receives the broadcast mail.

Accordingly, it enables to know the fact the broadcast mail has been sent and view the broadcast mail at the transferred place without going out to the place where the broadcast receiving device installed.

Also, this device may comprise an e-mail generating unit operable to generate an e-mail when triggered by an event notified by a broadcast, an e-mail sending/receiving unit operable to send/receive an e-mail via a bidirectional communication line and a broadcast event sending unit operable to send the e-mail generated by the e-mail generating unit using the e-mail sending/receiving unit, or may comprise an e-mail generating unit operable to generate an e-mail when being triggered by a state change of the broadcast receiving device, an e-mail sending/receiving unit operable to send/receive an e-mail via a bidirectional communication line and a state changing sending unit operable to send the e-mail generated by the e-mail generating unit using the e-mail sending/receiving unit.

The present invention can be realized as a mail sending/receiving method with steps of the component elements (unit) included in the broadcast sending/receiving device, realized as a program causing a computer to function as these steps, or realized as a memory medium such as a CD-ROM with the program being recorded. The program according to the present invention can also be marketed via transmission medium such as Internet.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
Fig. 1 is an external view of an overall arrangement of the mail sending/receiving system where the broadcast receiving device is used according to the embodiment of the present invention.
Fig. 2A is a block diagram that shows the broadcast mail and Fig. 2B is a block diagram showing a data structure of mail with an e-mail header.
Fig. 3 is a diagram showing a data structure of an e-mail.
Fig. 4 is a diagram showing an example of a sender's address setup table.
Fig. 5 is a block diagram showing a detailed structure of the broadcast receiving device shown in Fig.1.
Fig. 6 is a flow chart showing operation for a movement of the e-mail header add-on processing executed by the CPU shown in Fig.5.
Fig. 7 is a flow chart showing a movement of the e-mail receiving processing that executed by the CPU shown in Fig.5.
Fig. 8 is a flow chart showing operations for the received mail display processing that executed by the CPU shown in Fig.5.
Fig. 9A is a diagram that shows the receiving mail display screen when a cursor is on an e-mail, and Fig.9B is a diagram that shows the received mail display screen when a cursor is on a broadcast mail.
Fig. 10 is a flow chart that shows an example of transformation of the e-mail header add-on processing to the broadcast mail.
Fig. 11 is a diagram that shows an example of a data structure of the broadcast mail generated by the processing shown in Fig.10.
Fig. 12 is a flow chart that shows a color indicator setup processing of the broadcast mail.
Fig. 13 is a diagram that shows the received mail view display.
Fig. 14 is a block diagram that shows a detailed construction of the broadcast receiving device in the second embodiment.
Fig. 15 is a diagram that shows an example of the construction of the broadcast event sending process table 400 shown in Fig.14.
Fig. 16 is a flow chart that shows operations of the broadcast mail transfer processing that executed by the CPU shown in Fig.14.
Fig. 17 is a flow chart that shows operations of the broadcast event sending process that executed by the CPU when the broadcast event notice is to be the trigger as shown in Fig.14.
Fig. 18 is a flow chart that shows operations of the broadcast event sending processing that executed by the CPU when the state change of the receiver is to be the trigger shown in Fig.14.
Fig. 19 is a diagram that shows the display of the track record (transmitted mail) of the broadcast event sending processing on a screen.

### DESCRIPTION OF THE PREFERRED EMBODIMENT(S)

The following is an explanation of the broadcast receiving device and method according to the embodiments of the present invention with reference to figures.

### (The First Embodiment)

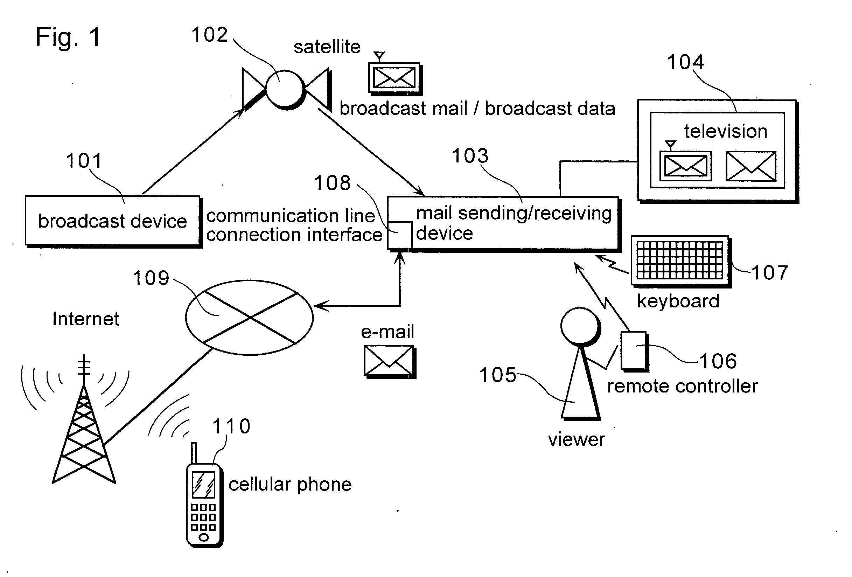

Fig. 1 is a diagram that shows an overall structure of a mail sending/receiving system comprising of a broadcast receiving device according to the first embodiment.

As shown in this figure, the mail sending/receiving system is a system that is to transmit the broadcast data or a mail in one way between a broadcast device 101 connected to a first transmission medium and a broadcast receiving device 103, or a system that is to send/receive the e-mail between the broadcast receiving device 103 connected to the second transmission medium and a cellular phone 101. This system comprises of the broadcast device 101, a satellite 102 which forms the first transmission medium, a broadcast receiving device 103, a television 104, a remote controller 106 and a keyboard 107 fixed to the broadcast receiving device 103, a communication line connection interface 108 installed in the broadcast receiving device 103, an Internet 109 that forms a second transmission medium and works as a e-mail sending/receiving channel and a cellular phone 110 which is able to send/receive the e-mail via the Internet 109.

The broadcast device 101 is installed in a well-equipped specialized agency such as a broadcast station, from where image and sound broadcast data, a broadcast mail including EMM message and EMM mail, and program information are sent toward the satellite 102.

The satellite 102, which is an earth satellite that hook ups the broadcast satellite, means the broadcast satellite and the communication satellite.

The broadcast receiving device 103 receives the broadcast data transmitted from the broadcast device 101 via the satellite 102, and has a function not only of displaying the information on the television 104, but of receiving the broadcast mail sent from the broadcast device 101 via the satellite 102, and also has a function of displaying the broadcast mail together with the e-mail received via the Internet 109 on one screen.

When the broadcast receiving device 103 receives the broadcast data, it analyzes the received broadcast data, and displays the image and sound data on the television 104, if necessary. In the case of the data broadcast program, the synchronized data of the image and sound is to be displayed. Since the contents of the broadcast data here does not necessarily relate to the present invention, the broadcast mail is to be explained hereinafter focusing on it.

When the broadcast receiving device 103 receives the broadcast mail, it analyzes the received broadcast mail and displays on the same view with the e-mail received via the Internet 109. Further, according to the contents of the display, it allocates the requested operation to a certain button of the remote controller 106 dynamically.

The communication line connection interface 108 sends/receives the e-mail via the Internet 109 after it established the communication circuit between the broadcast receiving device 103 and the Internet 109 in response to the request of the viewer (operator) 105. The communication line connection interface 108 means a modem, an Ethernet or a radio transmission.

The Internet 109 is a communication channel to communicate via a mail server (not shown in figures) to exchange e-mails between the broadcast receiving device 103 and other broadcast devices (i.e.the cellular phone 110).

The cellular phone 110, for example, is a belonging of the viewer 105, and it is taken along when the viewer 105 goes out and has a function of sending/receiving e-mails.

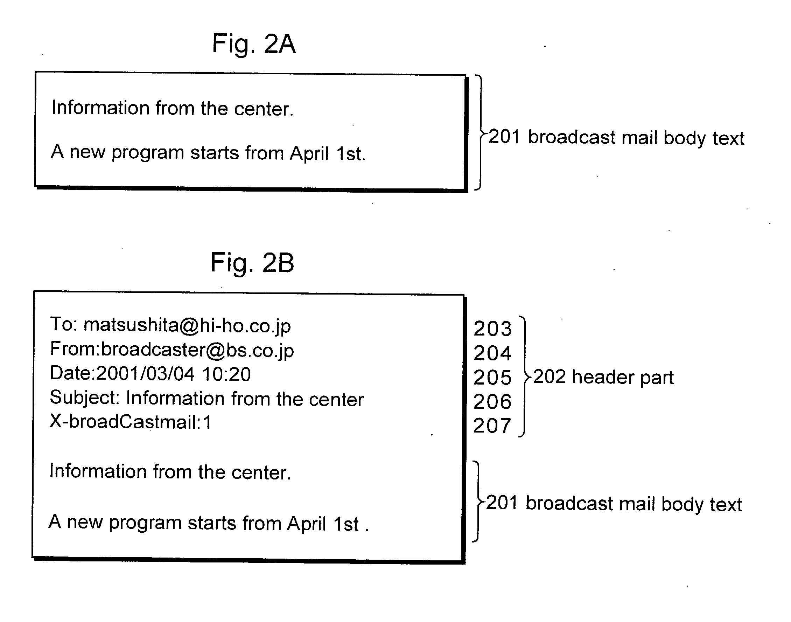

Fig.2A is a diagram that shows the data structure of the broadcast mail.

The broadcast mail body text 201 is to be sent as an EMM section. In addition, in the areas of the broadcast mail header (not shown), a fixing part of the EMM message body text and the EMM message decryption header, etc, there are fields for a card identification ID number to distinguish the EMM body part that addresses to a certain person by filtering of many broadcast mails, and for a charging entity identifier that transmitted the mail.

Fig.2B is a diagram that shows the data structure of the broadcast mail with the e-mail header being added.

This broadcast mail includes a header part 202 including a receiver (To) 203, a sender (From) 204, a Date 205, a Subject 206, a broadcast mail identifier (X- ) and field of X-BroadCastMail 207 of a unique identifier (Broadcast Mail) and a broadcast mail body text 201.

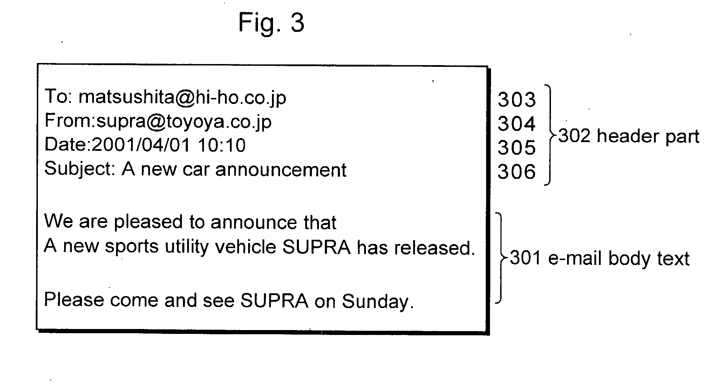

Fig. 3 is a diagram that shows the data structure of the e-mail that is sent and received via the Internet 109.

The e-mail data includes a header part 302 including a receiver (To) 303, a sender (From) 304, a Date 305, and a Subject 306 and an e-mail body text 301.

In the area of the header part 302, there are many display contents (fields) other than those shown in Fig.3, but only those related to the present the invention is to be explained here.

matsushita@hi-ho.co.jp, is added on to the receiver (To) 203 field in the area of the header part 202 shown in Fig.2B, is set with using a pre-registered mail address in an account (folder) which the viewer 105 created in a memory medium in this broadcast receiving device 103.

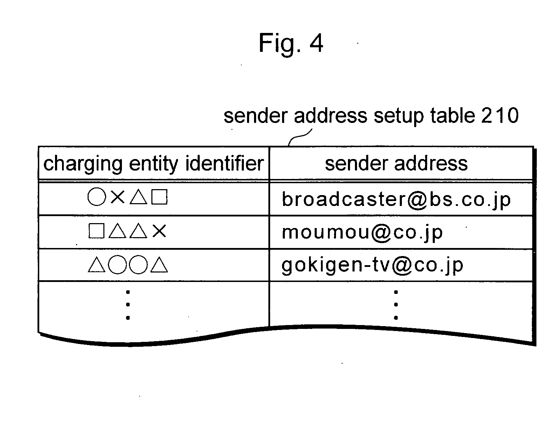

Also, broadcaster@bs.co.jp, which is added on to the field of the sender (From) 204, is set up according to the sender address setup table 210 which memorizes a matching relation of the code of the "charging entity identifier" shown in Fig.4 and its "mail address" is to set up. It is also possible for the sender address setup table 210 to set and memorize a matching relation between a "channel number" which is allocated to the charging entity and a "mail address" of the charging entity.

Also, '2001/03/04 10:20' which is to be added to field of the Date (205) is set according to inside timer in the broadcast receiving device 103.

The notice "Information from the center", add on to the field of the subject 206, is set up by the broadcast mail body text 201. For example, one sentence of the broadcast mail body text 201 is used as the subject 206.

Further, '1', which is to be added to the broadcast mail identifier (X-BroadCast Mail) 207, is a flag indicating that it is a broadcast mail.

Accordingly, a broadcast mail specific card ID number, not treatable in e-mail, is discarded from a broadcast mail with an e-mail header being added, so as to be treated same as the general e-mails.

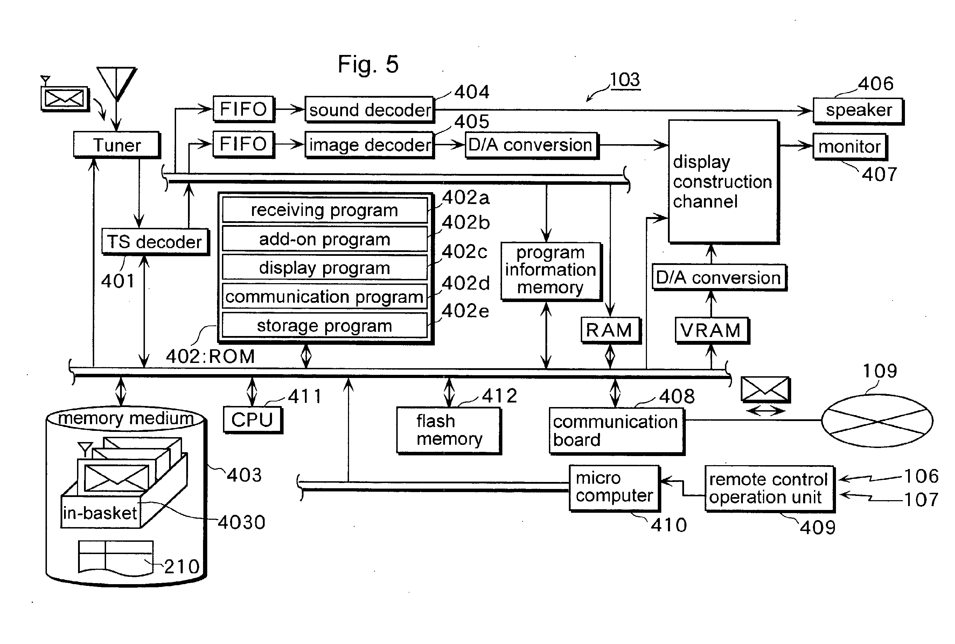

Fig.5 is a block diagram that shows a detailed structure of the broadcast receiving device 103.

Fig.5 shows the overall structure of the broadcast receiving device 103 since a receiving function is same as the conventional technique, only the part which relates to the present invention will be explained here. As for the conventional receiving function of the satellite broadcasting, please refer to the Japanese Laid-Open Patent Application No. 2000-358231" DATA TRANSMISSION/RECEPTION SYSTEM AND ITS METHOD",

There are two constructional differences between this broadcast receiving device 103 and the conventional satellite broadcasting device. First of all, the memory medium 403 is included. Second, an add-on program 402b a display program 402c, a communication program 402d and a storage program 402e are recorded on ROM 402.

The memory medium 403 is a medium on which the recording information of the broadcast program and the information of the broadcast mail and the e-mail are to be recorded. This memory medium 403 is equivalent to a hard disk drive and a flash memory and so forth.

In addition, in a recording folder for information of the broadcast mail and the e-mail in the memory medium 403, there is an in-basket 4030 installed to store the received e-mail or broadcast mail. Also, in this memory medium 403, the above-mentioned sender address setup table 210 is stored.

The add-on program 402b, recorded on the ROM 402, is a program that is to analyze the broadcast mail and then attach the e-mail header to the broadcast mail body text.

The display program 402c is a program that is to display the broadcast mail and the e-mail stored in the memory medium 403 (in-basket 4030) on a monitor 407 based on the display request from the viewer 105.

The communication program 402d is a program that is to send/receive the e-mail via the Internet 109. This program realizes the well-known mail send/receive protocol such as POP3 (Post Office Protocol 3), IMAP4 (Internet Message Access Protocol 4), and SMTP (Simple Mail Transfer Protocol).

The storage program 402e is a program that is to store the broadcast mail the e-mail header added by the add-on program 402b and the e-mail received from the communication program 402d on the memory medium 403 (in-basket 4030).

In addition, the program (402a to 402e) recorded on the ROM 402 may be a program that functions independently, but it can be the operation system (OS) as well.

The communication board 408 is a communication line connection interface 108 set between the broadcast receiving device and the Internet 109.

A remote control operation unit 409 receives the remote control information which the viewer 105 inputs, this remote control operation unit 409 does not only perform the conventional operation such as selecting a broadcast program or controlling of volume but selects a remote control button relating to the present invention or output the received information from the "communication service" button to a micro computer 410. Also, when sending an e-mail, the remote control operation unit 409 receives the input information such as a mail text sent from a keyboard 107 with an infrared ray.

The micro computer 410 analyzes the remote control information from the remote control operation unit 409 and then commands the desired operation towards the CPU 411 as the need arises.

A flash memory 412 memorizes the necessary information for the program view reservation and the program recording reservation based on the remote control information input from the remote control operation unit 409. The necessary information for the program view reservation and the program recording reservation is the information of original_network_id, transport_stream_id, service_id, event_id, and the EIT (Event Information Table) information (the starting time or continuous duration of the program, etc.) specified by the information above.

The CPU 411 controls each of the constructional elements in real event according to the instruction of the program recorded in the micro computer 410 and the ROM 402. Also, when the necessary information for the program view or recording reservation is acquired, the CPU 411 writes this information into the flash memory 412. Furthermore, according to the written contents of the flash memory 412, it receives the broadcast program automatically and displays it on the monitor 407 when the starting time comes in the case of the program viewing reservation, and it records the broadcast program automatically and record it on the memory medium 403 when the starting time comes in the case of the program recording reservation.

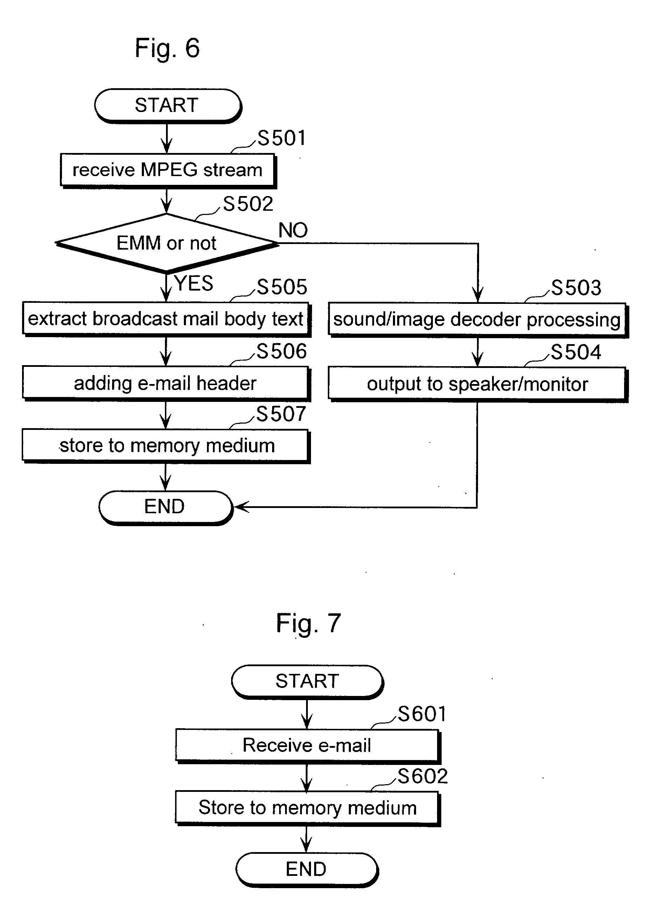

Next, the e-mail header adding processing that the CPU 411 executes will be explained with reference to the flow chart shown in Fig.6.

When receiving the MPEG stream (S501) in a TS decoder 401, the CPU 411 judges whether the MPEG stream received from the receiving program 402a is the EMM or not (S502).

When that is not the EMM ("NO" in S502), a MPEG stream is processed by the sound decoder 404 or the image decoder 405 (S503), and then outputted to a speaker 406 or on to a monitor 407 (S504).

When that is the EMM ("YES" in S502), the CPU 411 receives the EMM section and extracts the broadcast mail body text (S505), then adds the e-mail header to the broadcast mail by the add-on program 402b (S506). The CPU 411 stores the broadcast mail with the e-mail header into the memory medium 403 (in-basket 4030) by the storage program 402e (S507).

Next, the e-mail receiving processing executed by the CPU 411 will be explained with reference to the flow chart shown in Fig.7.

In the e-mail receiving processing, after the CPU 411 receives the e-mail via the communication board by the communication program 402d (S601), it stores the e-mail to the memory medium 403 (in-basket 4030) by the storage program 402e (S602). By doing this, the broadcast mail and the e-mail are stored in the same memory medium 403 (in-basket 4030). In addition, since the communication program 402d includes programs such as the PGP (Pretty Good Privacy), ZIP, UNZIP and so on, the communication program 402d makes it possible to receive the e-mail including an encrypted message or attaching of the compressed image, sound, and program, etc.

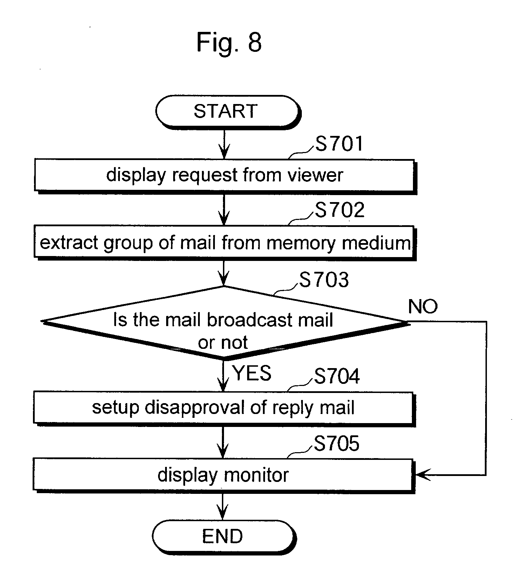

Next, the received mail display processing that executed by the CPU 411 will be explained with reference to the flow chart shown in Fig.8. This processing is to display the information of the broadcast mail and the e-mail stored in the memory medium 403 with above-mentioned e-mail header adding processing and the e-mail receiving processing in one screen.

When the received mail display request has been made (S701) from the viewer 105 by the remote controller 106 to the remote controller unit 409, the CPU 411 extracts the mail information from the memory medium 403 (in-basket 4030) by the display program 402c (S702), and judges whether it is the broadcast mail or not by the presence or absence of broadcast mail identifier 207 of the e-mail header part with every mail information (S703).

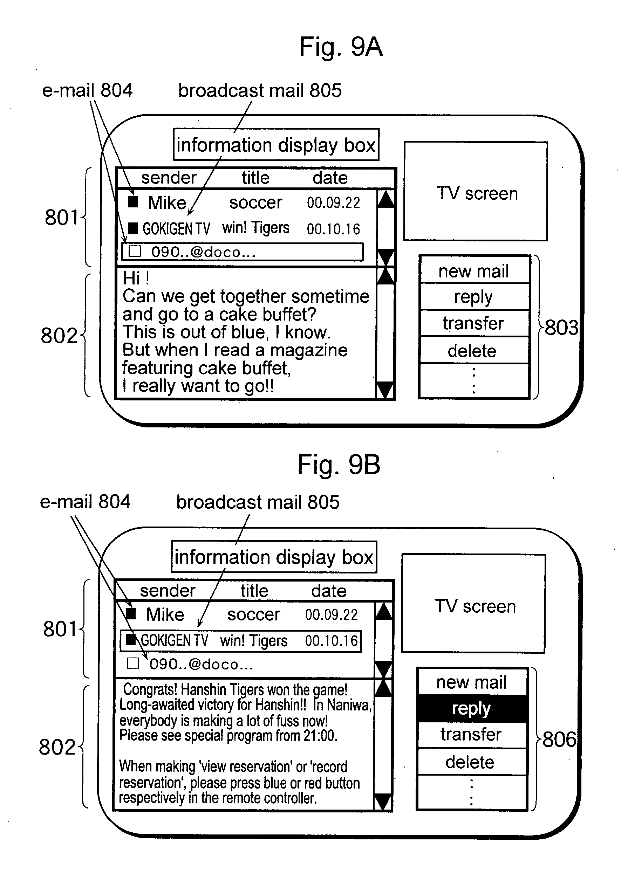

When it is the broadcast mail ('YES' in S703), the CPU 411 executes the processing of changing the operation display contents such as the setting of disapproval of reply mail (S704), for example. This processing is necessary due to the broadcast mail for being the one-way communication. Then, the CPU 411 displays the broadcast mail and the e-mail on the same one monitor 407 (S705, refer to Fig.9B). What it meant for the word "reply" here is to send back a message to the sender's mail address.

When it is not the broadcast mail ('NO' in S703), the CPU 411 displays the broadcast mail and the e-mail on the same one monitor 407 without executing the processing of changing the operation display contents, as stated above, (S705, refer to Fig.9A).

Here, the viewer 105 may press the "mail" button allocated to the remote controller 106 or request the display of received mails after selecting the mail with operating the up·down·left·right key of the remote controller 106 on the displayed menu screen on the television 104.

Fig.9 is a diagram that shows the received mail display view displayed on the monitor by the processing of the step 705. Especially, Fig.9A is the received mail display screen on which the broadcast mail and the e-mail are displayed on the same one screen when the cursor is on the e-mail. Fig.9B is the received mail display screen on which the broadcast mail and the e-mail are displayed on the same one screen and when the cursor is on the broadcast mail.

The received mail display 801 includes a received mail display window 801, a preview window 802 and a mail operating item 803 or 806.

The received mail display window 801 is a window that displays the e-mail 804 and the broadcast mail 805 on the same view.

The "■" means "already read", "□" means "not read yet", and the cursor indicates the e-mail currently selected by the viewer 105, as shown in the received mail display window 801.

The preview window 802 is a window that displays the preview of the e-mail 804 or the broadcast mail 805 when pointing out the cursor to the focused object.

The mail operation item 803 is an operation item that is displayed when the cursor is on the e-mail displayed in the receiving display window 801. In this mail operation item 803, there are items set up; a "new mail" item which is operated when a new e-mail is created, a "reply" item which is operated when the reply mail is created in response to the received mail, a "transfer" item which is operated when the received mail should be transferred to the third party (including the third address), and a "delete" item which is operated when deleting the received mail and so on.

A mail operation item 806 is an operation item that is displayed when the cursor is on the broadcast mail displayed in the received display window 801. The reply item is a gray color (in this figure, it is indicated in outline characters on a colored background), and the mail is set up not to reply to the sender. The viewer 105 can request the desired operation by operating the up·down·left· right key of the remote controller 106 from the mail operating item 803 or 806 displayed on the television 104 and then pressing the decision key.

In addition, the mail operation item 803 or 806 is displayed as a menu display for sending /receiving an e-mail on the television 104, only the necessary items can be displayed with popping up by pressing the "menu" button of the remote controller 106. Furthermore, by selecting the received mail in the received mail display window 801, a window may display the mail body text separately from the preview window.

Also, in the present invention, the case that the viewer 105 operates the broadcast receiving device 103 using the remote controller 106 is described. However, the viewer 105 may also operate with the keyboard 107. And also, in the present invention, one case is described that the broadcasting satellite is to be the television broadcast. However, the terrestrial broadcasting, the cable television and the Internet broadcasting can be replaced.

As stated above, according to the first embodiment, this broadcast mail can be treated same as the e-mail because the header of the e-mail is attached to the broadcast mail body text. As a result, the broadcast mail and the e-mail can be stored in the same memory medium or viewed at the same time. Accordingly, it is possible to avoid the complicated operation which has been necessary for viewing the mail depending only on the classification of the broadcast mail and the e-mail, thus the mail view operation can be improved to a large extent.

In addition, in the above first embodiment, when receiving the broadcast mail, the sender address (From field) is always set by using the sender address setup table 210 as shown in Fig.4, but in the case that the broadcast station information (service channel ID, i.e."BS 101") is inserted to the broadcast mail (EMM), the broadcast station information may be added to the broadcast mail header, and only when the broadcast station information is not inserted, the sender address may be set up by using the sender address setup table 210. By doing so, the broadcast mail can be displayed in one screen with every name of the service channels (organization and frequency channel) that is set up in the "From" field and used by the broadcast station.

Also, in the first embodiment, only the identifier indicating that it is the broadcast mail is added to the broadcast mail header, in addition to the address and the subject. However, when the broadcast mail (EMM) includes the level of importance information indicating the level of importance mail (i.e.Priority), the setting field of this level of importance information (i.e.X-MailPriority) is established in the broadcast mail header, and then the level of importance may be set in this field. In this case, by using this level of importance information established in the header, the broadcast mail can be highly noticeable, and when there is not enough time, the viewer can narrow down the high level of importance from the enormous number of broadcast mails, and distinguish the must-view mails from must-not-view mail.

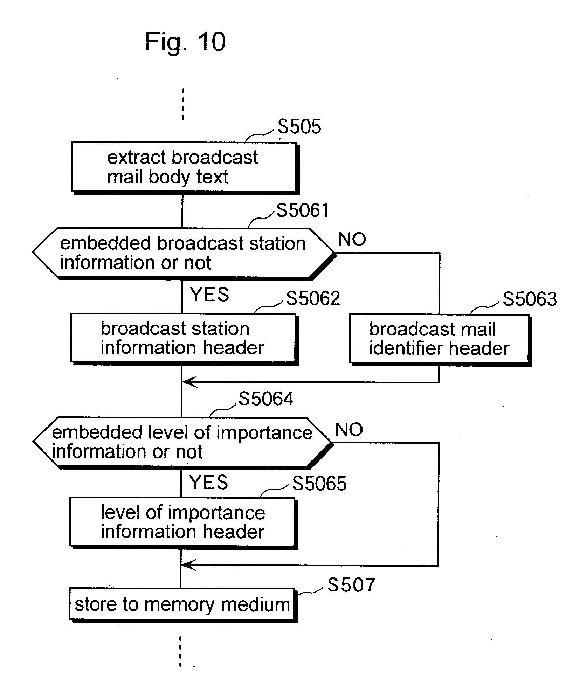

As mentioned above, when adding the broadcast station information or the level of importance information to the broadcast mail header, the add-on processing of the e-mail header (S5061-S5065) shown in the Fig.10 is executed instead of the step S506 shown in Fig.6.

This add-on processing of the e-mail header is executed after extracting the broadcast mail body text (S505), and whether there is the broadcast station information or not (embedded or not) in the broadcast mail (EMM) is judged (S5061).

When embedded ('YES' in S5061), the embedded broadcast station information is read out and stored into the broadcast mail header (the From field and the X-broadCastMail field which indicate the broadcast mail) (S5062).

When not embedded ('No' in S5061), using the sender address setup table 210 shown in Fig.4, the accommodation sender address is stored in the From field, and the identifier "1" indicating the broadcast mail is stored in the X-broadCastMail field (S5063).

When storing the identifier to the header is finished, whether there is the level of importance information or not in the broadcast mail is (EMM), in other words, whether the level of importance information is embedded or not is judged (S5064).

When the level of importance information is embedded ('YES' in S5064), the level of importance information is stored into the header (X-MailPriority field) (S5065). In this embodiment, there are three levels to indicate the importance, the lowest "3" to the highest "1".

On the other hand, when the level of importance information is not embedded ('NO' in S5064), the header attaching processing is finished without setting up the X-MailPriority field. By this processing, the header attached broadcast mail is stored in the memory medium (S507).

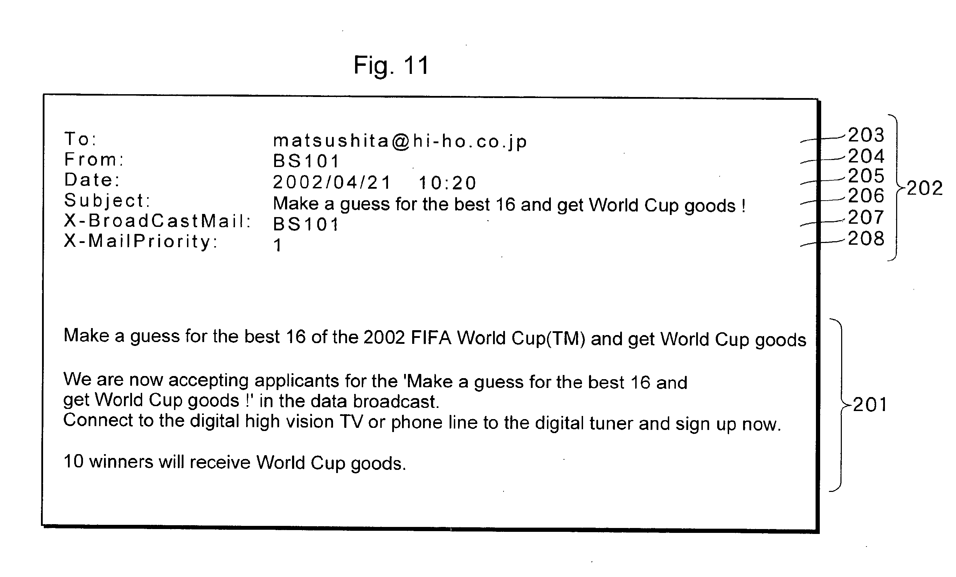

Fig.11 is a diagram that shows one example of data structure of the broadcast mail which is created with the processing above (S5061 to S5065).

This broadcast mail includes the header part 202 including the receiver (To:matsushita@hi-ho.co.jp) 203, the sender (From:BS101) 204, the date (Date:2002/04/21 10:20) 205, the subject (Subject:Make a guess for the best 16 and get World Cup goods!) 206, the broadcast mail identifier (X-BroadCastMail:BS101) 207, and the level of importance information (X-MailPriority:1) 208, and the broadcast mail body text 201.

Accordingly, the broadcast mail to which the e-mail header is added can be treated same as the general e-mails.

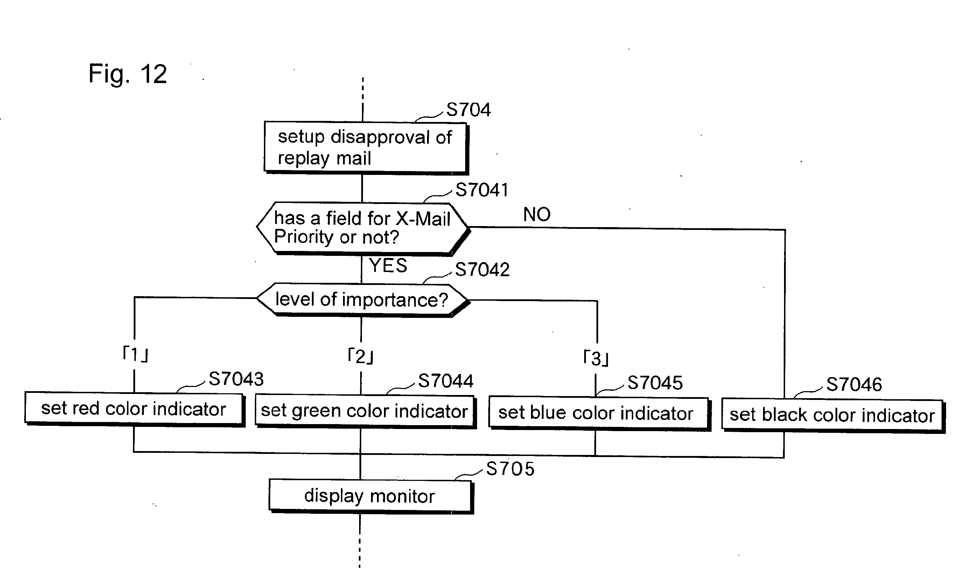

Also, as mentioned above, when displaying the broadcast mail to which the level of importance mail information is added, the color indicator setup processing (S7041 to S7046) of the broadcast mail shown in Fig.12 is executed between the step S704 and the step S705 shown in Fig.8.

The color indicator setup processing is executed after setting up the disapproval of reply mail mentioned above (S704), and whether there is a field for the level of importance in the broadcast mail header is judged (S7041). When there is the level of importance information field ('Yes' in S7041), the level of importance that set in that field is decided (S7042). When the level is '1', set the color indicator of the broadcast mail displayed in the received mail display window 801 is set to be red (S7043). When the level is '2', the color indicator of the broadcast mail is set to be green (S7044). When the level is '3', the color indicator of the broadcast mail is set to be blue (S7045). On the other hand, without a field of the level of importance (NO in S7041), the color indicator of the broadcast mail is set to black (S7046). By doing so, the broadcast mail on which the color indicator is set is displayed on the monitor (S705).

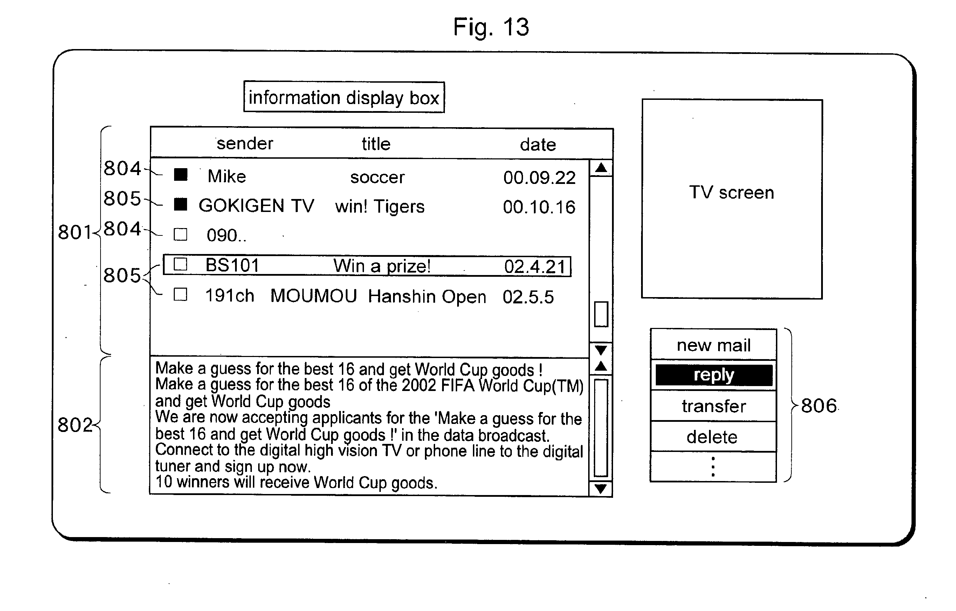

Fig.13 is a diagram that shows the received mail screen displayed on the monitor by the processing above (S7041-S7046).

As for the "GOKIGEN TV" field in the broadcast mail 805 displayed in the received mail display window 801 of the received mail screen display, there is no setting for the level of importance. As a result, the letter of the "GOKIGEN TV" field is indicated in black. Also, the mail for the "191 ch" field, the level is set in '3'. So, the color of the letter is to be blue. As for the mail of the field of the BS101, since the level set in '1', the color of the letter is to be red. Within these color indicators, 'black', 'blue' and 'red', the red color stands out. So, the probability that the viewer 105 points the cursor to the field of BS101 becomes high. Accordingly, the possibility of reading the mail body text displayed in the preview window 802 with keeping pointing out the cursor to the field of the BS101 or the possibility of reading the mail after moving the cursor location to the preview window 802 becomes high, too.

In addition, in above, the color is to be changed in accordance with the level of the importance. But it is possible to change the point of the letter according to the level. For example, when the level is '1', the point of the letter is to be 20. When the level is '2', the point of the letter is to be 15. When the level is '3', the point of the letter is to be 10, and when the level is not appointed, the point of the letter is to be 8.

### (The Second Embodiment)

The following is an explanation of the broadcast receiving device according to the second embodiment with reference to figures. Please note that this overall structure of the mail receiving/sending system including the broadcast receiving device according to the second embodiment is as same as the Fig.1 in the first embodiment. Therefore, leaving out to show the overall structure of the system, and the present invention is to be explained with reference to the numbers of Fig.1.

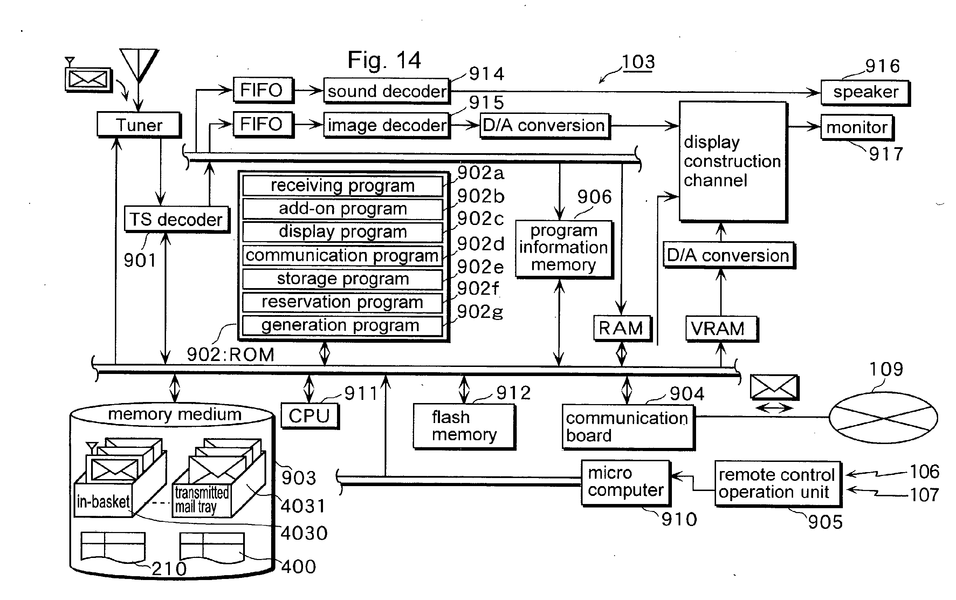

Fig.14 is a block diagram that shows a detailed structure of the broadcast receiving device 103 of the second embodiment.

The broadcast receiving device 103 shown in Fig.14 has a difference from the first embodiment in that the reservation program 902f and the generation program 902g are recorded in the ROM 902.

Since a TS decoder 901, a receiving program 902a stored in the ROM 902, an add-on program 902b, a display program 902c, a communication program 902d, a storage program 902e, a memory medium 903, a sound decoder 914, an image decoder 915, a speaker 916, a monitor 917, a communication board 904, a remote controller operation unit 905, a microcomputer 910, a CPU 911 and a flash memory 912 correspond to the TS decoder 401, the receiving program 402a stored in the ROM402, the add-on program 402b, the display program 402c, the communication program 402d, the storage program 402e, the memory medium 403, the sound decoder 404, the image decoder 405, the speaker 406, the monitor 407, the communication board 408, the remote controller operation unit 409, the microcomputer 410, the CPU 411 and the flash memory 412 of the broadcast receiving device 103 shown in Fig.5, respectively, and the functions are also same, so the explanation for the above will be omitted.

The reservation program 902f is a program for receiving the general broadcast or the data broadcast according to the EIT (Event Information Table) data stored in the program information memory 906 and monitoring the accumulate status of the received information into the memory medium 903 from start to end.

The generation program 902g is a program for creating the e-mail in accordance with the various event occurrences such as the start/end of the accumulation of the general broadcast or the data broadcast by the reservation program 902f or receiving the broadcast mail, etc. When executing this generation program 902g, the broadcast event sending processing table 400 stored in the memory medium 903 is used.

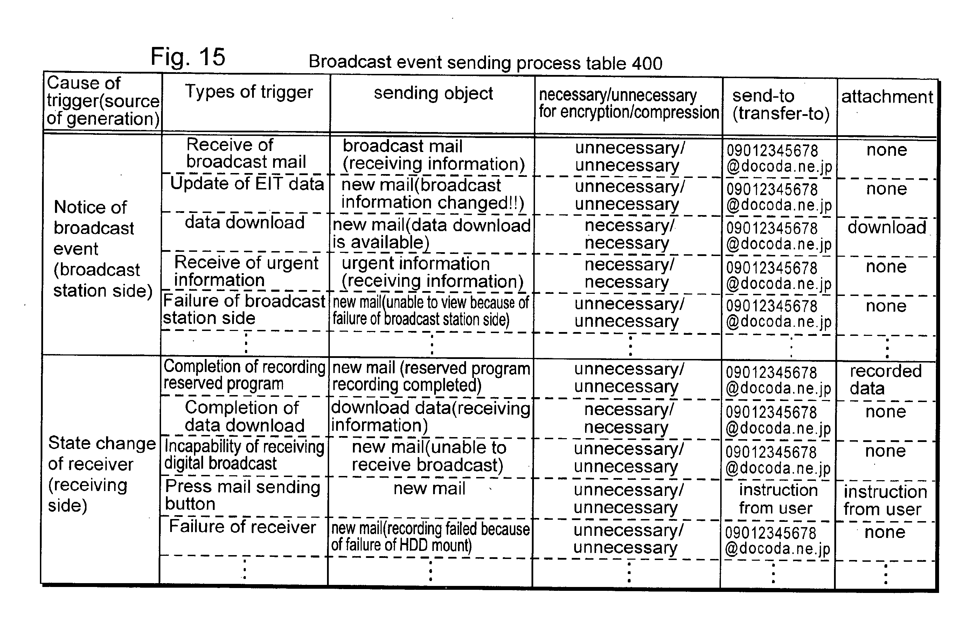

Fig.15 is a diagram that shows a detail of the broadcast event sending processing table 400 stored in the memory medium 903.

There are two types of broadcast event sending processing tables 400; one is the case that the broadcast event notice is to be the trigger (when the cause of the trigger is on the broadcast station side), the other is the case that the change of state of the receiver (broadcast receiving device 103) is to be the trigger. And both have fields for storing a "types of trigger", a "sending object", "necessary/unnecessary for encryption/compression", "send-to (transfer-to)" and "attachment" that are preset in response to the viewer 105's request.

When viewing the received broadcast mail with a cellular phone 110, in the case where the broadcast event notice is to be the trigger, the viewer 105, for example, sets the "types of trigger" field beforehand, and sets the broadcast mail, that is set the received information itself in the field of the "sending object", then, sets the own mail address of the cellular phone 09012345678@docomo.ne.jp in the field of the "send-to". When the EIT data is updated, or some data is downloaded, or the broadcast event notice such as receiving the urgent information is to be the trigger, and if the viewer wants to know the cause of the types of event or the contents of the event (received information) with the cellular phone 110, he may set the desired content in the fields of "types of trigger", "sending object" and "send-to", accordingly. Also, if the need or no need is set in the field of the "necessary/unnecessary for encryption/compression", sending object (new mail body text or the receiving information itself) can be compressed by ZIP or encrypted with a pre-holding sender's public key by PGP. Furthermore, it is possible to attach an appointed file to a new mail if the attachment file (receiving information) is appointed in the "attachment" field.

When the viewer 105 wants to know from the cellular phone 110 that he cannot view the mail as a result that an accident (i.e. broadcast equipment trouble, the line disconnected (including the satellite communication)) occurs at the broadcast station side, the viewer 105 presets a failure of the broadcast station in the field of the "types of trigger", when the broadcast event notice is to be the trigger, and sets a new mail (unable to view because of the failure of the broadcast station side) in the field of the "sending object", and then sets his own cellular phone mail address 09012345678@docomo.ne.jp in the field of the "send-to". In addition, for example, when damping of heavy rain occurs, it is possible to view the mail by tone change. However, even in this case, it may be set so that a new mail (image quality is downgraded by the damping of heavy rain) be notified as a trigger.

Also, as for the case that the state change of the receiver is to be the trigger, when wishing to know the completion of the recording of the reservation program or to view the recorded program, the viewer 105 presets the completion of the reservation program in the field of the "types of trigger" and sets a new mail (the reservation program recording has been completed) in the field of the "sending object", then sets your own cellular phone mail address 09012345678@docomo.ne.jp in the field of the "send-to" and sets the recorded data in the field of the "attachment".

Also, at the time of the completion of the data download or when the state change of the receiver, such as the non-receivable state of the digital broadcast (failure of the receiver), is to be the trigger, it is possible to know the type of the event that caused the trigger or the contents of the event (received information, failure of the receiver) with the cellular phone 110. When the viewer 105 wants to view it, he may set the desired contents in the fields of the "types of trigger", "sending object" and "send-to" properly.

As for the "necessary/unnecessary for encryption/compression" or the "attachment", it is same as the case of the broadcast event notice to be the trigger. When sending a mail as usually, the user's instruction may be set in the field of the "send-to". In this case, the mail, created by the viewer 105, is to be sent to the address where the viewer 105 appointed by pressing the mail sending button.

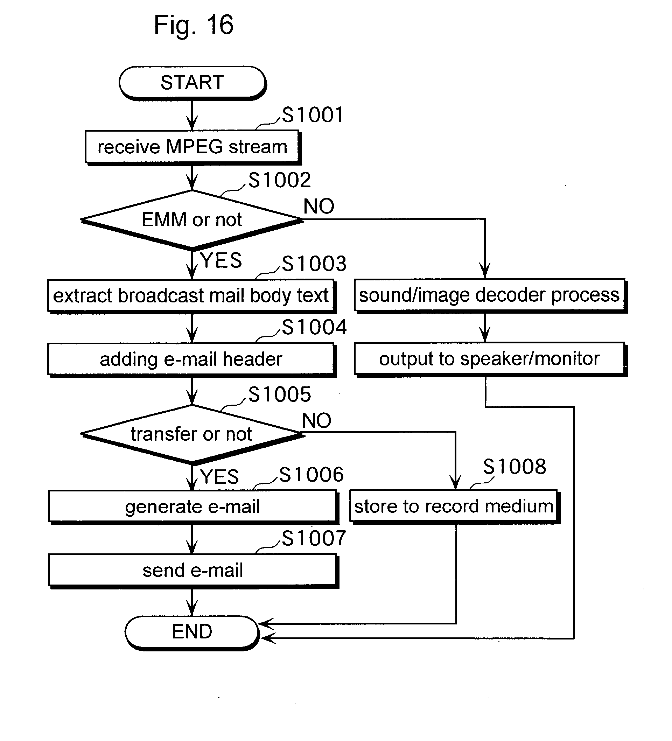

Next, the broadcast mail transfer processing executed by the CPU 911 will be explained with reference to the flow chart in Fig. 16.

When receiving the MPEG stream in the TS decoder 901 (S1001), the CPU 911 judges whether the MPEG stream is EMM, received by the receiving program 902a, or not (S1002). When it is the EMM, the CPU 911 receives the EMM section and extracts the broadcast mail body text (S1003), then adds the e-mail header to the broadcast mail by the add-on program 902b (S1004). After that, the CPU 911 judges whether the transfer request is made from the viewer 105 or not. This judgment is made depending upon whether the item of "receiving of the broadcast mail" is set in the "types of trigger" field or not, by referring to the broadcast event sending processing table 400 as shown in Fig.15. Here the "transfer" means sending the received message to a sender and/or the other address.

When the transfer request has been made from the viewer 105 (YES in S1005), by the generation program 902g, the broadcast mail with the e-mail header added is prepared as the mail body text, and then a e-mail is created of which mail address (09012345678@docomo.ne.jp) is pre-registered in the broadcast event sending processing table 400 is reset to the receiver (To) (S1006), then sent as a e-mail from the communication board 904 by the communication program 902d (S1007).

According to the broadcast receiving device 103 shown in the second embodiment, the viewer is able to know the fact of receiving the broadcast mail from the cellular phone 110 in outside, what is more, the viewer is able to view the broadcast mail.

In addition, the e-mail with the same content of the e-mail sent from the communication board 904, is stored in the transmitted mail tray 4031 set in the memory medium 903 for the viewing of the track record.

When the transfer request has not been made ('No' in S1005), the broadcast mail with the e-mail header added is stored in the memory medium 903 (in-basket 4030). As a result, the broadcast mail and the e-mail are viewed in one screen as in the case of the first embodiment.

The broadcast mail transfer request may well be preset by pressing the transfer button allocated in the remote controller 106, or by pressing the decision key after operating the up·down·left· right key in the remote controller 106, or by choosing the transfer from the menu display indicated in the television 104.

Next, the broadcast event sending processing executed by the CPU 911 will be explained. In this processing, there are two cases, one is that the broadcast event notice is to be the trigger, and the other is that the state change of the receiver is to be the trigger, as separated in the broadcast event sending processing table 400.

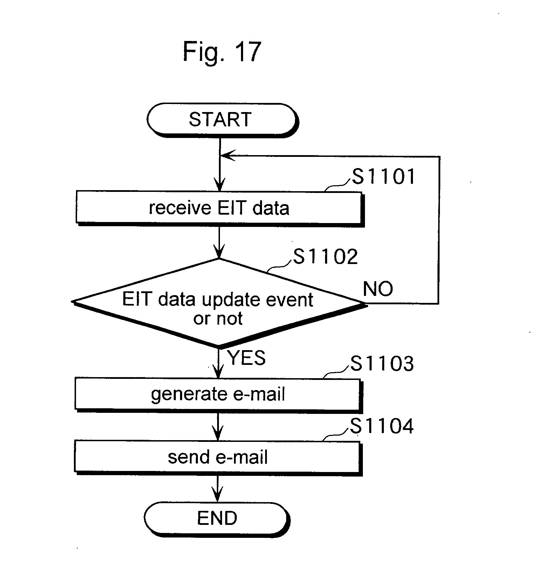

First of all, the broadcast event sending processing in the case when the broadcast event notice is to be the trigger will be explained with reference to the flow chart in Fig.17. Since the transfer processing of the broadcast mail in the case where the broadcast event notice is to be the trigger has already been explained in the above, other cases will be focused on below (i.e. update of the EIT data).

In general, the EIT data is received in the TS decoder 901 (S1101) and stored in the program information memory 906. When storing it, the CPU 911 judges whether the received EIT data is the update data of the EIT data stored in the program information memory 906 or not (S1102). This EIT data update is executed when the program time is extended in the sport program, for example, and the judge is to be made according to the version number of the EIT data, for example.

When the EIT data is the update data ('YES' in S1102), the CPU 911 refers the broadcast event sending processing table 400 and generates the mail body text (broadcast information changed!) based on the EIT update data by the generation program 902g, creates an e-mail in which the pre-registered mail address (09012345678@docomo.ne.jp) is set to be the receiver (To) (S1103), and sends it from the communication board 904 by the communication program 902d as an e-mail (S1104).

According to the broadcast receiving device 103 of the second embodiment, the viewer is able to know the EIT data change by the cellular phone 110 without going to the installed place.

In addition, a mail, with the same contents of the e-mail, is stored in the transmitted mail tray 4031 in the memory medium 903 for the viewing of the track record, as in the case of the broadcast mail transfer.

Although only the case of the EIT data update for the broadcast event notice has been explained, the broadcast event notice can be the download data. Receiving the urgent information or the failure of the broadcast station side is also replaceable. In this case, the contents of the steps S1101, S1102 are to be changed according to the broadcast event sending processing table 400. In this case also, without going out to the place where the broadcast receiving device 103 is installed, the viewer is able to know and view the fact that data has been downloaded or the urgent information by the cellular phone 110 in outside.

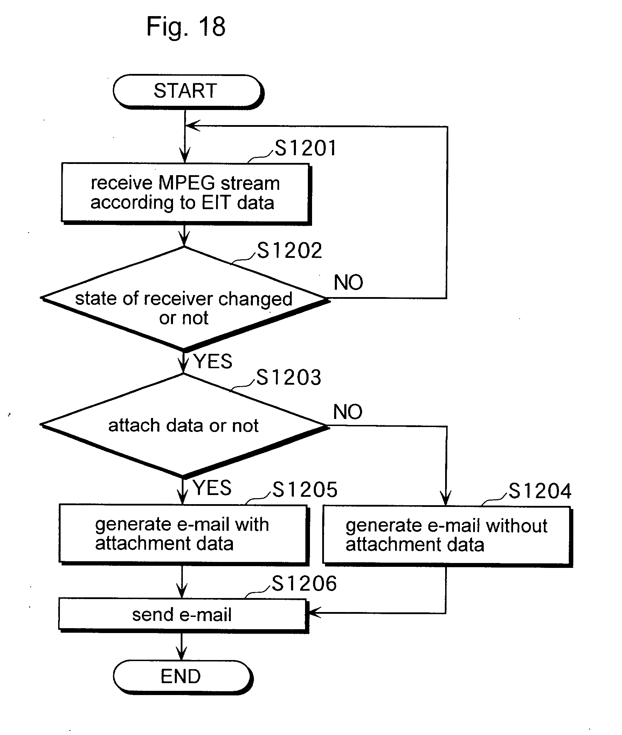

Next, the broadcast event sending processing when the state change of the receiver is to be the trigger will be explained with reference to the flow chart shown in Fig.18.

The TS decoder 901 receives the MPEG stream based on the EIT data stored in the program information memory 906 under the monitoring from the reservation program 902f (S1201), and the program stream is stored in the memory medium 903.

When it is judged that the receiver is in the end of storing state by the reservation program 902f ('YES' in S1202), the CPU 911 judges whether there is a setup for the attachment of the program stream stored in the memory medium 903 by the viewer 105 with reference to the broadcast event sending processing table 400 (S1203).

When there is a setup for the attachment ('YES' in S1203), the mail body text is generated based on the state change of the receiver by the generation program 902g, and the pre-registered mail address (09012345678@docomo.ne.jp) is set to be the receiver (To), and an e-mail is prepared with the stored program stream encoded with the MIME (Multipurpose Internet Mail Extension) attached (S1205), and sent from the communication board 904 by the communication program 902d as an e-mail (S1206).

According to the broadcast receiving device 103 in the second embodiment, without going out to the place where the broadcast receiving device is installed, the viewer is able to know the completion of the recording of the reservation program and view the recorded data attached to the e-mail from the cellular phone 110 in outside.

When there is no setup for the attachment ('NO' in S1203), the mail body text is generated based on the state change of the receiver by the generation program 902g, and only the e-mail in which the pre-registered mail address (09012345678@docomo.ne.jp) is set to be the receiver (To) is created (S1204), and sent from the communication board 904 by the communication program 902d as an e-mail (S1206).

According to the broadcast receiving device in the second embodiment, without going out to the place where the broadcast receiving device is installed, the viewer is able to know the completion of the recording of the reservation program.

In addition, the e-mail with the same contents as the e-mail created with the step S1206 or the step S1204 is to be stored in the transmitted mail tray 4031 installed in the memory medium 903 and is viewed as the track record, as in the case of the broadcast mail transfer.

The setup of whether the data is to be attached or not may be preset by pressing the "attachment setting" button which is allocated in the remote controller 106, or by pressing the decision key at the desired position after operating the up-down-left-right key of the remote controller 106. Or it may be preset by choosing the data attachment from the menu screen displayed on the television 104.

Also, although it has been explained on the assumption that the change state of the receiver is to be the recording completion of the reservation program, it can be the completion of the data download or the failure of the receiver, for example, the case of non-receivable state of the digital broadcast or non-recordable state of the reservation program by the mount failure of the HDD. In this case, without going out to the place where the broadcast receiving device 103 is installed, the viewer is able to know the completion of the data download, or the failure of the receiver such as non-receivable state of the digital broadcast or the mount failure of HDD.

Furthermore, as for the attachment data, the binary data compressed by the compressing software, may be encoded. Also, the data may be encrypted with the destination's pre-holding public key by the PGP. The download data can be the game software, image data, sound data or interactive contents of broadcasting described with BML (Broadcast Markup Language) etc. And the other operations are same as those of the first embodiment.

According to the broadcast receiving device 103 of the second embodiment, the viewer is able to know the completion of the data download or to view the downloaded data from the cellular phone 110 without going to the place where the broadcast receiving device 103 is installed.

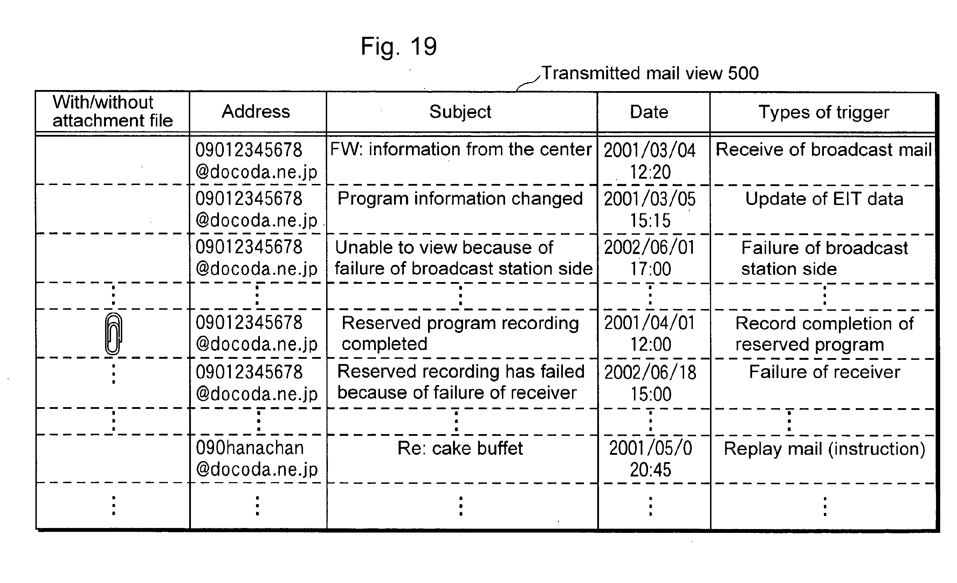

When the transmitted mail display request is made by the viewer 105 from the remote controller 106 to the remote operation unit 409, the CPU 411 extracts the mail information from the memory medium 403 (transmitted mail tray 4031), then displays the transmitted mail view 500 (shown in Fig.19) on the monitor. As a result, the viewer 105 can view the track record of the transmitted mails and the broadcast events at the same time, instantly.

## Claims

1. A broadcast receiving device comprising:
a broadcast mail receiving unit operable to receive a broadcast mail; and
an e-mail header adding unit operable to add an e-mail header to the broadcast mail received by the broadcast mail receiving unit.

2. The broadcast receiving device according to Claim 1,
wherein the e-mail header adding unit incorporates a broadcast mail identifier for identifying whether the mail is a broadcast mail or not into the e-mail header to be added.

3. The broadcast receiving device according to Claim 2 further comprising:
an e-mail sending and receiving unit operable to send and receive an e-mail via a bidirectional communication line;
a mail holding unit operable to hold the broadcast mail to which the e-mail header is added by the e-mail header adding unit and the e-mail received by the e-mail sending and receiving unit; and
a received mail display unit operable to display the broadcast mail and the e-mail held by the mail holding unit.

4. The broadcast receiving device according to Claim 3,
wherein the received mail display unit includes:
a header analyzing unit operable to analyze an e-mail header of a selected e-mail; and
an operation item changing unit operable to change a given operation item when the mail selected by the broadcast mail identifier is judged as a broadcast mail by the header analyzing unit.

5. The broadcast receiving device according to Claim 4,
wherein the operation item changing unit changes the operation item to an item indicating that the broadcast mail cannot be replied.

6. The broadcast receiving device according to Claim 2,
wherein the e-mail header adding unit incorporates broadcast station information indicating a sender of the broadcast mail into the broadcast mail identifier when the broadcast station information is included in the broadcast mail received by the broadcast mail receiving unit, and incorporates a predetermined broadcast mail identifier into the broadcast mail identifier when the broadcast station information is not included.

7. The broadcast receiving device according to Claim 1,
wherein the e-mail header adding unit incorporates level information indicating the level of importance of the broadcast mail into the e-mail header to be added when level information is included in the broadcast mail received by the broadcast mail receiving unit.

8. The broadcast receiving device according to Claim 7 further comprising :
an e-mail sending and receiving unit operable to send and receive an e-mail via a bidirectional communication line;
a mail holding unit operable to hold the broadcast mail to which the e-mail header is added by the e-mail header adding unit and the e-mail received by the e-mail receiving unit; and
a received mail display unit operable to display the broadcast mail and the e-mail held by the mail holding unit,
wherein the received mail display unit includes:
a header analyzing unit operable to analyze the e-mail header of the mail to be displayed; and
a display mode setting unit operable to set a mail display mode according to level information obtained from the header analyzing unit.

9. The broadcast receiving device according to Claim 8,
wherein the display mode setting unit controls a color indicator of the broadcast mail to be displayed according to the level of importance.

10. The broadcast receiving device according to Claim 8,
wherein the display mode setting unit controls a size of letters of the broadcast mail to be displayed according to the level of importance.

11. The broadcast receiving device according to Claim 1 further comprising:
an e-mail sending and receiving unit operable to send and receive an e-mail via a bidirectional communication line; and
a broadcast mail transferring unit operable to transfer a broadcast mail of which body text is added with an e-mail header by having the e-mail sending and receiving unit send the broadcast mail when the broadcast mail receiving unit receives the broadcast mail.

12. The broadcast receiving device according to Claim 11,
wherein the broadcast mail transferring unit transfers the broadcast mail based on a pre-registered transfer address.

13. The broadcast receiving device according to Claim 11,
wherein the broadcast mail transferring unit transfers the broadcast mail after compressing the broadcast mail body text.

14. The broadcast receiving device according to Claim 11,
wherein the broadcast mail transferring unit transfers the broadcast mail after encrypting the broadcast mail body text.

15. The broadcast receiving device according to Claim 11 further comprising a received mail display unit operable to display the broadcast mail transferred by the e-mail transferring unit and the e-mail sent by the e-mail sending unit according to an operation from an operator.

16. The broadcast receiving device according to Claim 1,
wherein the broadcast mail receiving unit receives the broadcast mail via a satellite broadcast, a terrestrial broadcast, an Internet broadcast or a cable television broadcast.

17. The broadcast receiving device according to Claim 3,
wherein the e-mail sending and receiving unit sends and receives the e-mail by a modem, an Ethernet, and a radio transmission.

18. A broadcast receiving device comprising:
an e-mail generating unit operable to generate an e-mail when being triggered by an event notified by a broadcast;
an e-mail sending and receiving unit operable to send and receive an e-mail via a bidirectional communication line; and
a broadcast event sending unit operable to send the e-mail generated by the e-mail generating unit using the e-mail sending and receiving unit.

19. The broadcast receiving device according to Claim 18,
wherein the event notified by the broadcast is an update of service infromation.

20. The broadcast receiving device according to Claim 18,
wherein the event notified by the broadcast is a download of data.

21. The broadcast receiving device according to Claim 18,
wherein the event notified by the broadcast is a receiving of urgent information.

22. The broadcast receiving device according to Claim 18,
wherein the event notified by the broadcast is a failure of a broadcast station side.

23. The broadcast receiving device according to Claim 18,
wherein the e-mail generating unit has an address administration unit operable to define correspondence between a pre-registered destination address and the destination address of the e-mail.

24. The broadcast receiving device according to Claim 18,
wherein the e-mail generating unit generates an e-mail with data acquired by receiving a broadcast mail being attached or an e-mail incorporated with data into a body text of the e-mail.

25. The broadcast receiving device according to Claim 18,
wherein the e-mail generating unit has a compression unit operable to compress the mail body text or the data to be attached.

26. The broadcast receiving device according to Claim 18,
wherein the e-mail generating unit has an encryption unit operable to encrypt the mail body text or the data to be attached.

27. The broadcast receiving device according to Claim 18 further comprising a sent mail display unit operable to display the e-mail sent by the broadcast event sending unit and the e-mail sent by the e-mail sending unit according to an operation of an operator.

28. The broadcast receiving device according to Claim 18,
wherein the broadcast is a satellite broadcast, a terrestrial broadcast, an Internet broadcast or a cable television broadcast.

29. The broadcast receiving device according to Claim 18,
wherein the e-mail sending and receiving unit sends and receives the e-mail with a modem, an Ethernet and a radio transmission.

30. A broadcast receiving device comprising:
an e-mail generating unit operable to generate an e-mail when being triggered by a state change of the broadcast receiving device;
an e-mail sending and receiving unit operable to send and receive an e-mail via a bidirectional communication line; and
a state change sending unit operable to send the e-mail generated by the e-mail generating unit using the e-mail sending and receiving unit.

31. The broadcast receiving device according to Claim 30,
wherein the state change of the broadcast receiving device is completion of recording of a reservation program.

32. The broadcast receiving device according to Claim 30,
wherein the state change of the broadcast receiving device is completion of downloading of data.

33. The broadcast receiving device according to Claim 32,
wherein the download data in the data download is game software, image data , sound data, or a broadcast interactive content.

34. The broadcast receiving device according to Claim 30,
wherein the state change of the broadcast receiving device is a failure of the broadcast receiving device.

35. The broadcast receiving device according to Claim 30,
wherein the e-mail generating unit has an address administration unit operable to define correspondence between a pre-registered destination address and the destination address of the e-mail.

36. The broadcast receiving device according to Claim 30,
wherein the e-mail generating unit generates an e-mail with data acquired by receiving a broadcast mail being attached or an e-mail incorporated with the data into a body text of the e-mail.

37. The broadcast receiving device according to Claim 30,
wherein the e-mail generating unit has a compression unit operable to compress the mail body text or the data to be attached.

38. The broadcast receiving device according to Claim 30,
wherein the e-mail generating unit has an encryption unit operable to encrypt the mail body text or the data to be attached.

39. The broadcast receiving device according to Claim 30 further comprising a sent mail display unit operable to display the e-mail sent by the broadcast event sending unit and the e-mail sent by the e-mail sending unit according to an operation of an operator.

40. The broadcast receiving device according to Claim 30,
wherein the broadcast receiving device receives is a satellite broadcast, a terrestrial broadcast, an Internet broadcast or a cable television broadcast.

41. The broadcast receiving device according to Claim 30,
wherein the e-mail sending and receiving unit sends and receives the e-mail with a modem, an Ethernet and a radio transmission.

42. A broadcast receiving method including:
a broadcast mail receiving step for receiving a broadcast mail; and
an e-mail header adding step for adding an e-mail header to the broadcast mail.

43. The broadcast receiving method according to Claim 42,
wherein in the e-mail header adding step, a broadcast mail identifier for identifying whether the mail is a broadcast mail or not is incorporated into the e-mail header to be added.

44. The broadcast receiving method according to Claim 43 further including:
an e-mail sending and receiving step for sending and receiving an e-mail via a bidirectional communication line;
a mail storing step for storing the broadcast mail to which the e-mail header is added in the e-mail sending and receiving step and the e-mail in the mail storing unit; and
a received mail displaying step for displaying the broadcast mail and the e-mail stored by the mail storing unit.

45. The broadcast receiving method according to Claim 44
wherein the received mail displaying step includes:
a header analyzing step for analyzing an e-mail header of a selected e-mail; and
an operation item changing step for changing a given operation item when the mail selected by the broadcast mail identifier is judged as a broadcast mail in the header analyzing step.

46. The broadcast receiving method according to Claim 45,
wherein in the operation item changing step, the display of the operation item is changed to the display indicating that the broadcast mail cannot be replied.

47. The broadcast receiving method according to Claim 43,
wherein in the e-mail header adding step, the broadcast station information indicating a sender of the broadcast mail is incorporated into the broadcast mail identifier when the broadcast station information is included in the broadcast mail received in the broadcast mail receiving step, and a predetermined broadcast mail identifier is incorporated into the broadcast mail identifier when the broadcast station information is not included.

48. The broadcast receiving method according to Claim 42,
wherein in the e-mail header adding step, level information indicating the level of importance of the broadcast mail is incorporated into the e-mail header to be added when the level information is included in the broadcast mail received in the broadcast mail receiving step.

49. The broadcast receiving method according to Claim 42 further including:
an e-mail sending and receiving step for sending and receiving an e-mail via a bidirectional communication line; and
a broadcast mail transferring step for transferring the broadcast mail by sending the broadcast mail of which body text is added with an e-mail header in the e-mail sending and receiving step when the broadcast mail is received in the broadcast mail receiving step.

50. A broadcast receiving method including:
an e-mail generating step for generating an e-mail when being triggered by an event notified by a broadcast;
an e-mail sending and receiving step for sending and receiving the e-mail via a bidirectional communication line; and
a broadcast event sending step for sending the e-mail generated in the e-mail generating step by the e-mail sending step.

51. A broadcast receiving method including:
an e-mail generating step for generating an e-mail when being triggered by a state change of a broadcast receiving device;
an e-mail sending and receiving step for sending and receiving the e-mail via a bidirectional communication line; and
a state change sending step for sending the e-mail generated in the e-mail generating step by the e-mail sending and receiving step.

52. A program that is used for a broadcast receiving device,
wherein the broadcast receiving device comprises:
a broadcast mail receiving unit operable to receive a broadcast mail; and
an e-mail header adding unit operable to add an e-mail header to the broadcast mail received by the broadcast mail receiving unit, and
the program causes a computer to function as:
the broadcast mail receiving unit; and
the e-mail header adding unit.

53. A computer readable memory medium on which a program used for a broadcast receiving device is recorded,
wherein the broadcast receiving device comprises:
a broadcast mail receiving unit operable to receive a broadcast mail; and
an e-mail header adding unit operable to add an e-mail header to the broadcast mail received by the broadcast mail receiving unit, and
the program causes a computer to function as:
the broadcast mail receiving unit; and
the e-mail header adding unit.
